# EUROPEAN PATENT APPLICATION

(11) **EP 2 333 563 A1**
(43) Date of publication of application: **15.06.2011**
(21) Application number: 09179068.3
(22) Date of filing: 14.12.2009
(51) Int. Cl.: G01N 35/04, G01N 35/02

(54) **Analyzer comprising an apparatus for providing reagents**

(71) Applicant: Roche Diagnostics GmbH, 68305 Mannheim (DE); F. Hoffmann-La Roche AG, 4070 Basel (CH); Hitachi High-Technologies Corporation, Tokyo 105-8717 (JP)
(72) Inventor: Sattler, Stephan, 82319 Starnberg (DE); Kraemer, Reinhold, 82380 Peissenberg (DE); Sakairi, Susumu, Ibaraki-ken, 312-0011 (JP); Takahashi, Katsuaki, Ibaraki-ken, 312-0032 (JP)
(74) Representative: Tiesmeyer, Johannes

(57) **Abstract**

Analyzer comprising an apparatus for providing reagents,
wherein said apparatus comprises
- a turntable (1) having an axis (7) of rotation and being adapted for storing thereon a plurality of reagent containers (11) in an arrangement of at least one arcuate row,
- a treatment zone (23) for treating reagent containers (11) stored on said turntable (1), and
- treatment means (29, 38, 40) for treating reagent containers (11) positioned in said treatment zone (23),

wherein said turntable (1) comprises compartments (9, 25, 27) arranged to accommodate the reagent containers (11) at predetermined locations on the turntable (1), and wherein said turntable (1) is adjustable by rotation so as to selectively move compartments (9, 25, 27) in predetermined positions for disposing reagent containers (11) in predetermined positions in said treatment zone (23).
Said turntable (1) comprises
- a first circular turntable partition (3) centered around the axis of rotation (7) and carrying said arcuate row of compartments (9), and
- a second turntable partition (5) arranged radially adjacent to said first turntable partition (3) and carrying a first compartment (25) for accommodating a reagent container (11) therein,
wherein said first turntable partition (3) is rotatable relative to the second turntable partition (5) about said axis of rotation (7) so as to selectively adjust a compartment (9) of said first turntable partition in radial alignment with said first compartment (25) of the second turntable partition in a mutual transfer position in which a reagent container (11) is radially shiftable between said aligned compartments (9, 25) in said treatment zone (23).

## Description

The present invention relates to an analyzer comprising an apparatus for providing reagents to be used in analyses to be performed by the analyzer, wherein said apparatus for providing reagents comprises
- a turntable having an axis of rotation and being adapted for storing thereon a plurality of reagent container assemblies in an arrangement of at least one arcuate row,
- at least one treatment zone for treating reagent container assemblies stored on said turntable, and
- treatment means for treating reagent container assemblies positioned in said treatment zone,
wherein said turntable comprises compartments arranged to accommodate the reagent container assemblies at predetermined locations on the turntable so as to form said arrangement of at least one arcuate row of reagent container assemblies corresponding to the arrangement of said compartments, and wherein said turntable is adjustable by rotation so as to selectively move compartments in predetermined positions for disposing reagent container assemblies in predetermined positions in said treatment zone.

Analyzers of the above mentioned kind are known in various embodiments e. g. from EP 0 703 457 B1, EP 1 275 966 B1, US 7 547 414 B2 and US 7 384 601 B2.

Those analyzers are used for automatically analyzing samples in order to determine the existence and particularly the concentration of specific components in the samples. Such analyzers are widely used in hospitals and clinical laboratories to analyze biological samples, namely body fluids collected from patients, such as blood and urine, in order to diagnose their morbidities.

A method for analyzing such a biological fluid sample by means of an analyzer of the above mentioned type is explained e. g. in EP 1 051 621 B1.

The workflow of an analyzer of the above mentioned kind is usually completely sample orientated, i. e. analytical determinations are performed serially in a respective fluid sample, wherein for each analytical determination a set of different reagents is used to be added to a separated part of said sample. It is therefore required to provide a lot of different reagents on the turntable of the apparatus for providing reagents, and it is required that a fast access to particular reagent container assemblies on the turntable by treatment means such as pipetting means or agitating means is possible in order to achieve a high throughput of the analyzer. It is generally required that such an analyzer apparatus and particularly the apparatus for providing reagents has small dimensions to be space-saving.

It is an object of the present invention to provide an analyzer of the above mentioned type with an apparatus for providing reagents that may be operated in a more efficient way in comparison with analyzers of the prior art.

According to the present invention the analyzer of the above mentioned kind is **characterized in that** said turntable comprises
- a first circular turntable partition centered around the axis of rotation and carrying said arcuate row of compartments, and
- a second turntable partition arranged radially adjacent to said first turntable partition and carrying a first compartment for accommodating a reagent container assembly therein,
wherein said first turntable partition is rotatable relative to the second turntable partition about said axis of rotation so as to selectively adjust a compartment of said first turntable partition in radial alignment with said first compartment of the second turntable partition in a mutual transfer position in which a reagent container assembly is radially shiftable between said aligned compartments in said treatment zone.

The analyzer according to the present invention allows to pursue a specific strategy in supplying the reagents required for performing the analytical determinations according to specific assay protocols.

The steps of extracting different reagents from reagent container assemblies may take different times, depending on the particular reagents and special preparation measures to be taken before particular reagents can be withdrawn from reagent container assemblies by way of pipetting. Such a preliminary preparation step is a mixing or agitating step which is necessary to homogenize reagents which tend to sediment. One example for such a reagent is a suspension of beads. Such a suspension of beads is typically used in almost each analytical determination process to be performed with an analyzer according to the present invention. The beads tend to deposit on the bottom of the container section which includes the bead suspension. If beads of such a sedimented suspension are required for a present analytical determination process it is necessary to homogenize the suspension by way of agitation with a stirrer or the like which is to be dipped into the reagent container section. Such an agitating or mixing step is comparatively time-consuming.

According to the present invention such a time-consuming mixing step may be performed with the particular reagent to be mixed being provided in a reagent container assembly that is temporarily stored in the first compartment of the second turntable partition during the mixing step. In the meantime the first turntable partition may be operated to provide other reagent container assemblies in the treatment zone in order to be treated on a faster time scale, e. g. by extracting reagents therefrom by means of pipetting units. In other words, in the part of the treatment zone which is supplied with reagent container assemblies by the first turntable partition, treatment steps may be performed independently and parallel to a treatment step performed in the part of the treatment zone which is assigned to the second turntable partition.

After the termination of a time-consuming treatment step performed on a reagent container assembly provided on the second turntable partition, that reagent container assembly may be transferred to the first turntable partition. Thereafter, a further reagent container assembly may be transferred from the first turntable partition to the second turntable partition when the respective compartments have been radially aligned in their mutual transfer position.

The operation of the turntable and the treatment means is controlled by a controller in a time-optimized manner.

Preferably, the first circular turntable partition is arranged radially outward of the second circular turntable partition with regard to the axis of rotation. Such an arrangement can be realized in a space-saving manner with a relatively great capacity of the first turntable partition for storing a great number of reagent container assemblies.

The reagent container assemblies to be used in the analyzer according to the present invention are preferably multisection containers with at least two, preferably three container sections, each of which has an inner volume containing a particular reagent. The container sections are arranged side-by-side in a row and are connected to form a unitary cassette type assembly which has upper openings for gaining access to the inner volumes of the container sections by a stirrer, a pipetting unit or the like. Each opening is normally closed and covered by a respective cap which can be reversibly moved from its closing cover position to an opening position. Usually a cap will be in the opening position only for short times during momentary phases of access to the inner volume of the respective container section. Thereafter the cap should be moved back in the closing position in order to avoid evaporation and/or contamination of the reagent in the container section. The analyzer according to the present invention preferably comprises a cap manipulating mechanism for selectively displacing caps of reagent container sections into their opening position and closing position respectively. The cap manipulating mechanism is a part of the treating means of the analyzer.

In order to enable an automatic shifting of a reagent container assembly between the first turntable partition and the second turntable partition the analyzer of the present invention preferably comprises a container shift mechanism for shifting reagent container assemblies between radially aligned compartments of said turntable partitions in their mutual transfer positions, wherein said container shift mechanism comprises radially movable engagement means for engaging and shifting a reagent container assembly between compartments in their mutual transfer position. Such a shifting of a reagent container assembly is enabled only in the case that one of the aligned compartments is vacant.

According to a preferred embodiment of the invention the second turntable partition carries a plurality of compartments including said first compartment for accommodating reagent container assemblies in an arrangement of an arcuate row radially adjacent said arcuate row of compartments of the first turntable partition, wherein at least two of the compartments, preferably all compartments of said second turntable partition are radially alignable with respective compartments of the first turntable partition in mutual transfer positions. With regard to the last mentioned embodiment of the invention it is preferred that said container shift mechanism is movable around the axis of rotation in selected angular positions corresponding to angular positions of the radial alignment of compartments aligned in their mutual transfer positions. In this manner it is possible to exchange reagent container assemblies between various compartments of the turntable partitions. The compartments of the second turntable partitions may be used to store backup reagent container assemblies containing reagents which are used in larger amounts than other reagents for analytical determinations to be performed according to predetermined assay protocols. Such a backup reagent container assembly may be transferred from the second turntable partition to the first turntable partition in exchange with an at least partially empty reagent container assembly. In order to enable such transfers of reagent container assemblies between the turntable partitions it is necessary that at least one compartment is vacant for accomodating a reagent container assembly. The analyzer according to the present invention preferably comprises as treatment means pipetting means which are movable for access to at least one of reagent container assemblies positioned in said predetermined positions in said treatment zone. The pipetting means should be movable for access to reagent container assemblies positioned on the first turntable section and provided in said treatment zone. According to a further embodiment of the invention the pipetting means are also movable for access to a reagent container assembly positioned on the second turntable partition and provided in said treatment zone.

Preferably one of the compartments of the first turntable partition and at least one of the compartments of the second turntable partition are radially aligned to dispose reagent container assemblies contained therein on a straight radial line when positioned relative to each other in said predetermined positions in the treatment zone, wherein said apparatus for providing reagents comprises a driving and guiding means for selectively moving said pipetting means to reagent container assemblies positioned relative to each other in said predetermined positions in the treatment zone.

According to a further preferred embodiment of the invention said pipetting means comprise at least two pipetting units wherein said driving and guiding means are adapted to selectively move each pipetting unit according to a specific treatment programm. The pipetting units may be guided for common movement along a linear guidance which is oriented in the radial direction of the turntable. Each pipetting unit has a pipette tip or intake tube and the distance between the pipette tips of the common horizontally movable pipette units correspond to the distance between the centers of openings of adjacent reagent container sections of a reagent container assembly so that both pipette tips may be simultaneously moved into adjacent openings of a reagent container assembly positioned in the treatment zone. For the up-and-down movement of the pipette tips vertical drive means are provided which are preferably controllable to drive the pipetting tips independently from each other.

As mentioned above, it is preferred that the treatment means comprise agitating means including a stirrer adapted to access a reagent container assembly accommodated in the first compartment of the second turntable partition.

In case that the container shift mechanism is adapted to be operated in different angular positions beside or outside of the treatment zone section, in which the pipetting means operates, it is preferred that the container shift mechanism and the pipetting means and the agitating means are selectively operable in order to simultaneously treat separate reagent container assemblies with the container shift mechanism, the pipetting means and the agitating means, respectively.

The agitating means and the pipetting means are simultaneously operable in order to simultaneously treat separate reagent container assemblies, or in special cases the same reagent container assembly, with the agitating means and the pipetting means.

It is in the frame of the present invention that the first turntable partition and the second turntable partition are both rotatable about the axis of rotation in order to place reagent containers in predetermined positions. However, according to a preferred embodiment of the invention the second turntable partition is fixed with regard to the axis of rotation, whereas the first turntable partition is rotatable around the first turntable partition.

According to a further preferred embodiment of the invention the turntable has a radial inner center including the axis of rotation, wherein a cleaning station for cleaning treatment means and a drain channel for draining cleaning fluid is arranged in the area of said radial inner center. Such a construction may be realized by means of a hollow shaft of the turntable and at least one cleaning fluid source, particularly a nozzle providing cleaning fluid to be drained off in the drain channel. Since a stirrer of the agitating means usually must be cleaned after each mixing operation it is preferred that said agitating means is movable between a working position to agitate fluid in a reagent container assembly positioned in a compartment of the second turntable partition, particularly in the first compartment thereof, and a cleaning position to be cleaned by said cleaning means of said cleaning station.

Hereinafter, a preferred embodiment of the present invention will be explained with reference to the drawings.
Figure 1 is a top plan view of an embodiment of a turntable of an analyzer according to the present invention;
figure 2 is a top plan view of an apparatus for providing reagents according to the present invention including the turntable of figure 1;
figure 3a and figure 3b are perspective views of a reagent container assembly in the closed state and in the opened state;
figure 4 is a side view of treatment means of the apparatus of figure 2;
figure 5 is a perspective view of the treatment zone of the apparatus of figure 2;
figure 6 is a perspective view of a detail of the treatment zone;
figure 7 is a perspective view of a detail of the turntable and the container shift mechanism;
figure 8 is a perspective view of the container shift mechanism;
figure 9 is a perspective view of an alternative embodiment of a compartment dividing wall.

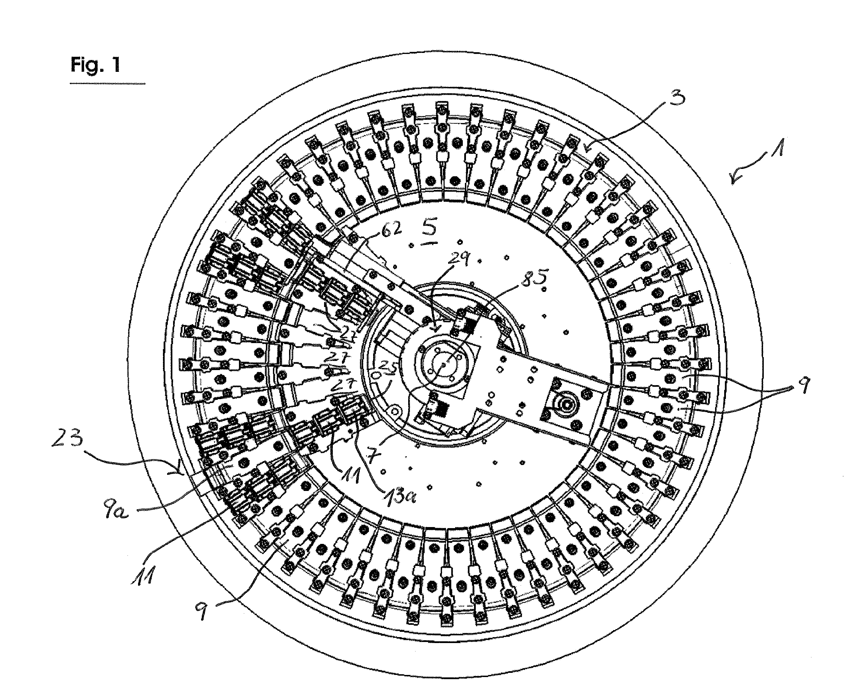

The turntable 1 shown in figure 1 has a circular construction with a radially outer ring-shaped first partition 3 and a radially inner circular or ring-shaped second partition 5. The first turntable partition 3 is movable about a vertical central axis of rotation 7 relative to the second turntable partition 5.

The first turntable partition 3 is equipped with a plurality of compartments 9, namely forty-eight compartments in the present embodiment. The compartments 9 are separated by dividing walls 56. Each compartment 9 is adapted to accommodate a reagent container assembly 11 in a fitted position.

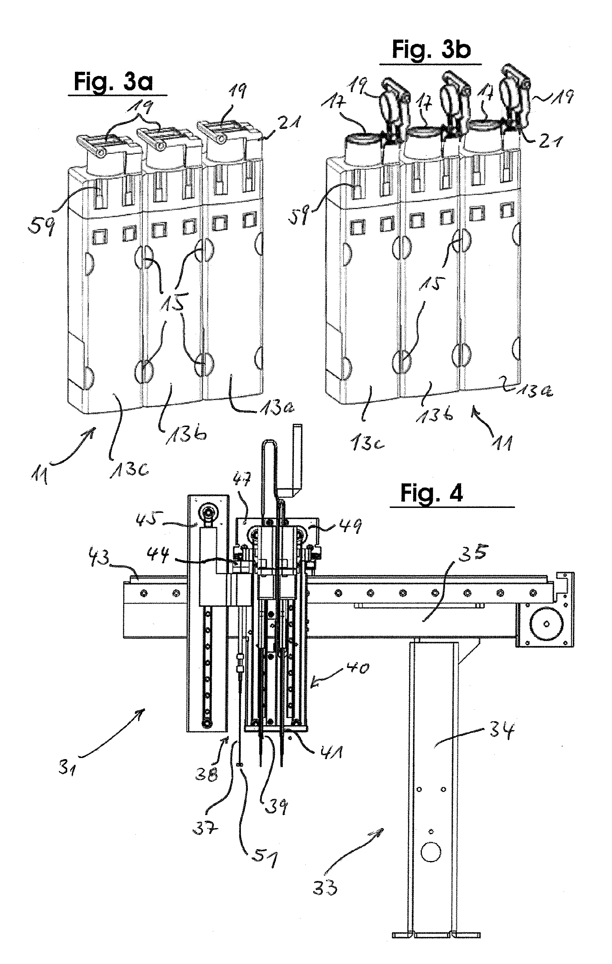

Each reagent container assembly 11 consists of three containers or container sections 13a, 13b, 13c as shown in figures 3a and 3b. The containers 13a, 13b, 13c are made of plastic material and are interconnected and fixed to each other at welding spots 15 so that they form a reagent container assembly 11 with three container sections 13a, 13b, 13c in an in-line configuration. Each container section 13a, 13b, 13c contains a particular reagent to be used in particular analytical determinations to be performed by means of the analyzer comprising the turntable 1. In the present embodiment the outer container section 13a in figures 3a and 3b contains a suspension of microparticles ("beads") which are used in the analytical determinations as micro carriers for complex molecules which are characteristic for the analysis.

The other container sections 13b and 13c contain other specific reagents to be used in analysis steps according to a specific assay protocol.

Each container section has an upper opening 17 which is normally closed by means of a cap 19 as shown in figure 3a. Each cap 19 is pivotable mounted to the housing of its container section 13a, 13b, 13c so that it is pivotable about the hinge 21 between a closing position according to figure 3a and the opening position according to figure 3b. Normally, the container sections 13a, 13b, 13c are closed by said caps 19 being in the closing position, in order to avoid evaporation of the reagents contained therein.

The container sections 13a - 13c have to be opened according to figure 3b if access to the inner volume thereof is required. An automatic cap manipulating mechanism (not shown) is adapted to selectively open or close the container sections 13a - 13c by moving the caps 19 in the respective closing or opening positions. Said cap manipulating mechanism is provided in a treatment zone 23 for treating a reagent container assembly 11 stored on said turntable 1 in respective compartments 9 and 25. The compartments 9 are arranged side-by-side to form an arcuate or ring-shaped row of compartments 9 on the first turntable partition 3. The second turntable partition 5 has a first compartment 25 which is radially aligned in the treatment zone 23. The compartments 25, 27 of the second turntable partition 5 are open at their radially outer ends, whereas the compartments 9 of the first turntable partition 3 are open at their radially inner ends. Since the second turntable partition 5 is fix with regard to the axis of rotation 7, the first compartment 25 remains in the treatment zone 23. Since the first turntable partition 3 is rotatable around the second partition 5 each compartment 9 of the second turntable partition 3 can be selectively moved into the treatment zone 23 in radial alignment with the first compartment 25 of the second turntable partition 5 in a mutual transfer position as it is shown in the snap shot of figure 1 for the compartment 9a of the first turntable partition 3. In said mutual transfer position the container assembly 11 which occupies the first compartment 25 can be shifted radially outward into the compartment 9a of the first turntable partition. Thereafter said reagent container assembly 11 can be removed from the treatment zone 23 by rotation of the first turntable partition 3. The first compartment 25 of the second turntable partition 5 is then vacant and may be loaded with another reagent container assembly 11 from the first turntable partition 3 after having positioned that reagent container assembly 11 in radial alignment with the first compartment 25.

Beside the first compartment 25 are arranged some further compartments 27 on the second turntable partition 5 to form a circular arc shaped row of radially oriented compartments 25, 27. Each compartment 27 may be used to exchange a reagent container assembly 11 between the first turntable partition 3 and the second turntable partition 5 in the manner as described above with regard to the first compartment 25.

The radial shifting of reagent container assemblies 11 between the turntable partitions 3, 5 is performed automatically by means of a container shift mechanism 29.

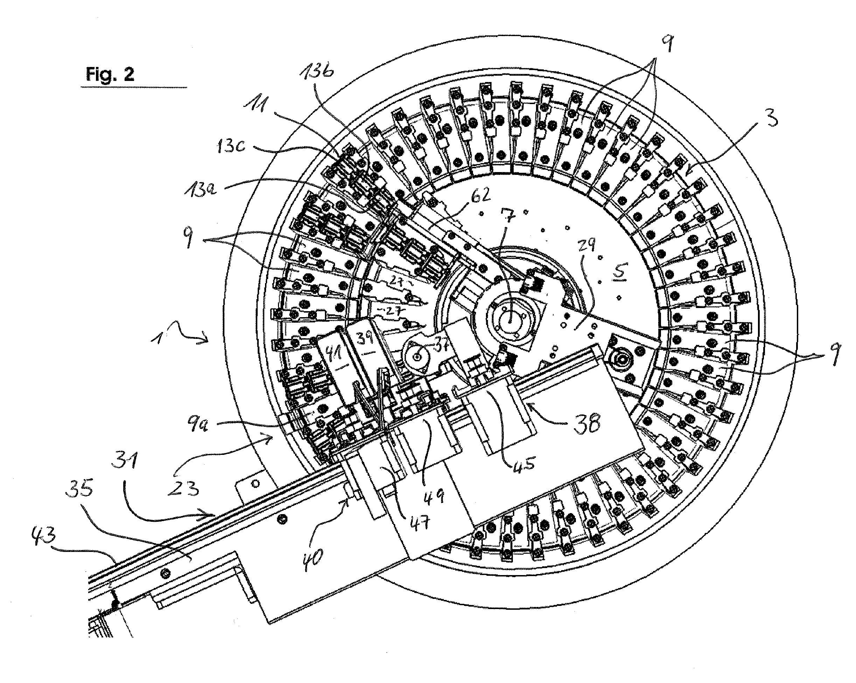

Figure 2 shows the turntable 1 in the same top plan view as figure 1, but with further components of the apparatus for providing reagents, namely treating means 31 for treating reagent container assemblies 11 positioned in said treatment zone 23.

The further treatment means 37 are also shown in a side view in figure 4. They comprise a frame 33 in the shape of a gallows with a vertical pile 34 fixed radially outward of the turntable 1 and a cantilever 35 extending horizontally from said pile 33 above the turntable 1 so as to dispose treatment units 37, 39, 41 for acting in said treatment zone 23. The treatment unit 37 is a stirrer which is a part of an agitating means 38 that is guided for horizontal movement on a linear guidance 43 which is attached to the cantilever 35. The units 39, 41 are pipetting tubes of a pipetting means 40 which is also guided for horizontal movement on said linear guidance 43. The agitating means 38 and the pipetting means 40 are movable independently from each other along the guidance 43 by driving means which are controlled by a control means (not shown).

The agitating means 38 has a vertical driving means 45 for selectively lowering or raising the stirrer 37, and a driver 44 for rotating the stirrer 37.

The pipetting means 40 comprises vertical driving means 47, 49 for each pipette unit 39, 41. Said vertical driving means 47, 49 of the pipetting units 39, 41 are controllable by the control means in order to independently raise or lower the pipetting units 39, 41.

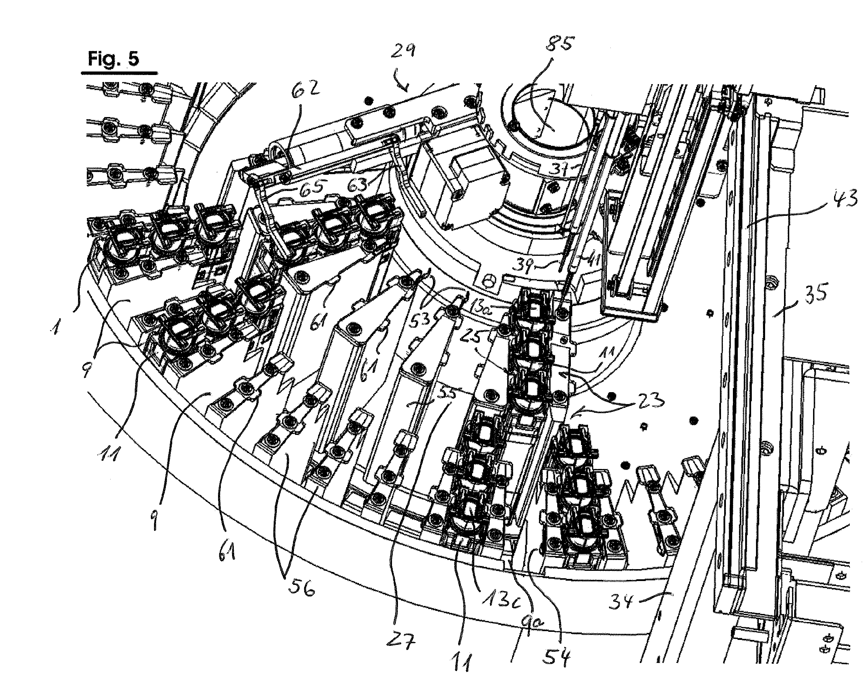

In figure 2 the agitating means 38 are adjusted on the horizontal guidance 43 and in stand-by position in which the stirrer 37 is in vertical alignment with the radially innermost disposed container section 13a of a reagent container assembly 11 accommodated in the first compartment 25 (cf. figure 1 and figure 5). Before the agitating means 38 are activated to mix the content of said container section 13a in the first compartment 25, the cap manipulating means has to be activated to move the cap 19 of this container section 13a in the opening position (cf. fig. 3b). Then the vertical drive means 45 may be activated to lower the stirrer 37 so as to insert said stirrer 37 through the uncovered opening 17 into the inner volume of the container section 13a, in order to agitate the reagent contained therein. The rotation of the propeller 51 of the stirrer 37 about its vertical axis is controllable by the control means.

As mentioned above, the container section 13a contains a bead suspension which must be homogenized by mixing before it is extracted by a pipetting unit 39, 41 for use in an analysis step. This step of agitating the suspension of beads is also called a bead mixing step. The bead mixing step is usually more time consuming then pipetting steps of the pipetting means 40. For this reason the apparatus for providing reagents according to figure 2 will be operated in such a manner that each bead mixing operation will be performed on the second turntable partition 5 with the container section 13a of the particular reagent container assembly 11 is positioned on the radial innermost location of the first compartment 25.

During the bead mixing step the first turntable partition 3 may be driven by its drive means to rotate in order to adjust a reagent container assembly 11 in a predetermined position in the treatment zone 23. Also the pipetting means 40 may be operated during the bead mixing step is performed. The pipetting means 40 is used to extract reagents from reagent container assemblies 11 currently adjusted in the treatment zone 23. The pipetting means 40 may be moved along its horizontal guidance 43 to selectively access in the treatment zone 23 container sections 13a, 13b, 13c in the first compartment 25 of the second turntable partition 5 or container sections 13a, 13b, 13c of a reagent container assembly 11 in a respective compartment 9a of the first turntable partition 3. After the current bead mixing step has been terminated and the stirrer 37 has been retracted from the container section 13a of the respective reagent container assembly 11 in the first compartment 25, this reagent container assembly 11 may be transferred to the first turntable partition 3 by radially shifting the reagent container assembly 11 outwards into a vacant compartment of the first turntable partition 3 by means of the container shift mechanism 29.

It is to be noted that at the same time both radially aligned compartments 9a, 25 in the treatment zone 23 may be occupied by a respective reagent container assembly 11, and that during the stirrer 37 of the agitating means 38 is activated to mix the content of container section 13a of the reagent container assembly 11 in the compartment 25 of the second turntable partition 5, the pipetting means 40 may be used to extract reagents from container sections 13a, 13b, 13c of the reagent container assembly 11 in the compartment 9a of the first turntable partition 3.

Catch springs 53, 54 are provided as snapping means on the vertical compartment dividing walls 55, 56. The catch springs 53 are mounted at an upper and radial inner position to the compartment dividing walls 55 of the second turntable partition 5 so as to be able to snap in an outer recess 57 of the radially innermost positioned container section 13a of a reagent container assembly 11 accommodated in the first compartment 25. The reagent container assembly 11 is automatically or self-adjusted when the catch spring has entered the radially innermost vertical groove or recess 57 of said reagent container assembly 11.

The catch springs 54 are mounted at an upper and radially outer position to the vertical compartment dividing walls 56 of the first turntable partition 3 in order to snap in a respective groove shaped recess 59 of the reagent container assembly 11 accommodated in the respective compartment 9 of the first turntable partition 3. Instead of the catch springs other snap means may be provided for adjusting the reagent container assemblies 11 in compartments 9, 25, 27.

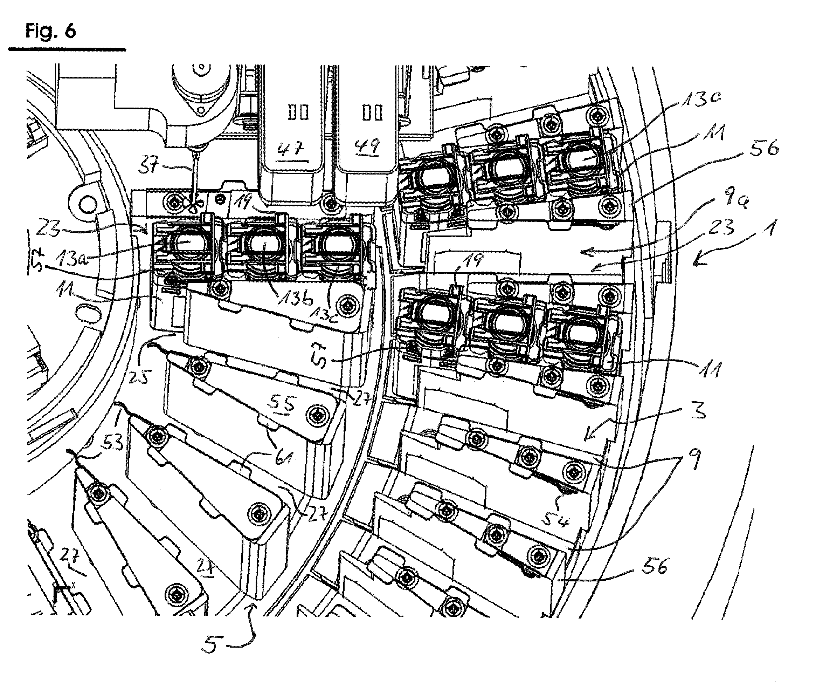

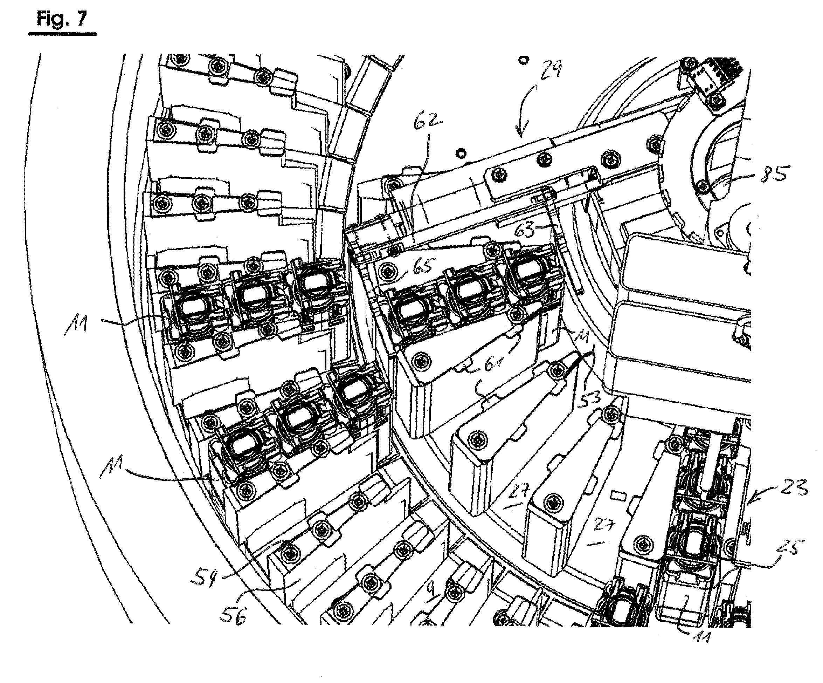

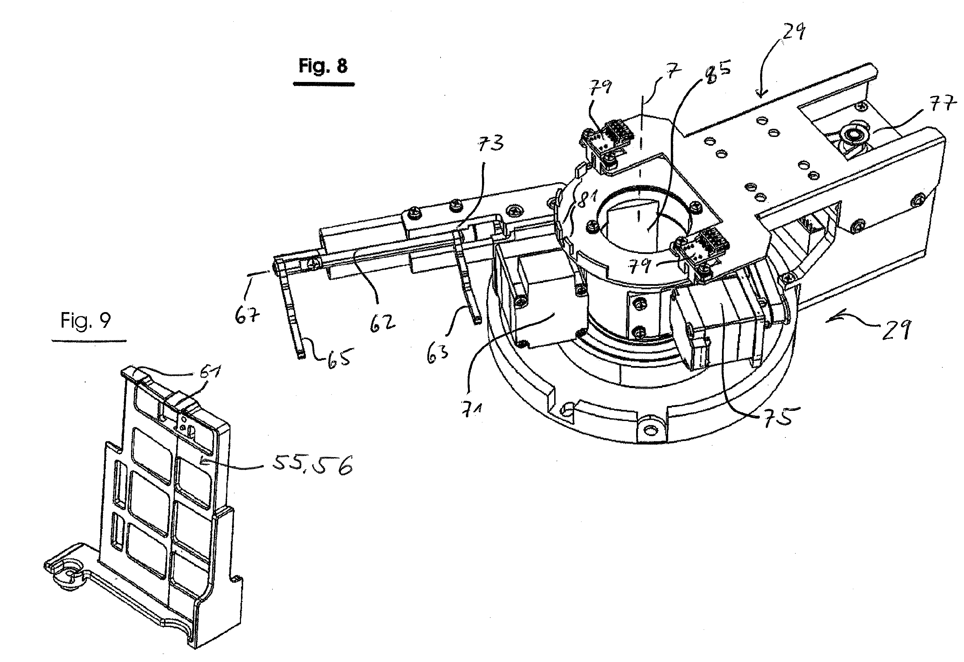

The compartments 9, 25, 27 may be equipped with spring-loaded bottom elements (not shown) which are adapted to urge the reagent container assemblies 11 accommodated in the compartments 9, 25, 27 upwardly against upper stops 61 extending from the compartment dividing walls 55, 56. The reagent container assemblies 11 are adjusted precisely also in the vertical direction by this measure. The upper stops 61 are shown in figures 1 - 7 as sidewardly extending protrusions of sheets mounted on top of the compartment dividing walls 55, 56 by means of screws. According to an alternative embodiment of the walls 55, 56 as shown in fig. 9 the stops 61 may be integrated parts of the walls 55, 56, wherein the walls 55, 56 with integrated stops are preferably plastic parts or milled metall parts.

The container shifting mechanism 29 has a shifting arm 62 with two gripping or engagement elements 63, 65 which are pivotable about the longitudinal axis 67 of the shifting arm 62 between an engagement position and a release position. The gripping elements 63 and 65, respectively, may engage a reagent container assembly 11 at an upper part at respective longitudinal ends thereof. The point of engagement is preferably located at a low level in the upper half of a respective reagent container assembly 11. The radial distance between said gripping elements 63, 65 is a little bit greater than the length of the reagent container assemblies 11 so that the gripping elements 63, 65 can adopt a reagent container assembly 11 therebetween. By shifting the shifting arm 62 in its longitudinal direction a reagent container assembly 11, that is adopted between the gripping elements 63, 65 in their engagement position, can be transferred between respectively aligned compartments of the first turntable partition 3 and the second turntable partition 5. The container shift mechanism 29 is movable to rotate the shifting arm 62 about the axis of rotation 7 to selectively gain access to each compartment 25, 27 of the second turntable partition 5 in order to transfer reagent container assemblies 11 from each compartment 25, 27 of the second turntable partition 5 to a respective aligned compartment of the first turntable partition 3. According to one embodiment the pivot movement of the elements 63, 65 may be started during the rotation of the shifting arm 62 about the axis 7.

When the gripping elements 63, 65 are in their release position they do not interfere with reagent container assemblies 11 on the turntable 1, so that the shifting arm 62 can not move a reagent container assembly 11.

It is to be noted that the container shifting mechanism 29 with its gripping elements 63, 65 can be operated to hold a reagent container assembly 11 in position in a respective compartment 9, 25, 27, e. g. during the opening of the container sections 13a - 13c of that reagent container assembly 11 by means of the automatic cap manipulating mechanism.

In the perspective view of the container shifting mechanism in figure 8 reference number 71 denotes a drive means for shifting the shifting arm 62 along a horizontal guidance 73 in its longitudinal direction. The reference number 75 denotes a driving means for rotating the shifting arm 62 about its longitudinal axis 67 in order to pivot the gripping elements 63, 65 between their engagement position and release position.

Reference number 77 in figure 8 denotes a driving means for rotating the container shift mechanism 29 about the vertical axis of rotation 7. The angular positions of the container shifting mechanism 29 relative to the axis of rotation 7 are monitored by means of photo-electric guards 79 which act together with a pattern of merlons 81 distributed on a circular arc around the axis of rotation 7.

In a similar manner the shift position and the pivot position of the shifting arm 62 are monitored by photo-electric guards.

The turntable 1 has arranged at its center a vertical tube, e. g. a hollow shaft which forms a drain channel 85 for draining a cleaning fluid of a cleaning station adapted for cleaning the stirrer 37 of the agitating means 38. For this reason, the agitating means 38 is movable along its horizontal guidance 43 between the stand-by position shown in figure 2 and a cleaning position in alignment with the drain channel or tube 85. Usually a cleaning step of the stirrer 37 is required after each bead mixing step. The provision of the cleaning station in the central region of the turntable is a space-saving measure which avoids long ways between the stand-by position and the cleaning position of the stirrer 37.

There are also provided cleaning means for cleaning the pipetting tubes 39, 41. The latter cleaning means are positioned outside the turntable 1 and are not shown.

According to the present invention it is possible to perform more time-consuming treatment steps on the second turntable partition 5 while faster treatment steps, including the rotation of the first turntable partition 1 and pipetting operations of the pipetting units 39, 41, may be performed. The apparatus for providing reagents according to the present invention may be operated very efficiently to achieve a high throughput of the analyzer. As mentioned above the control means is programmed to control the operation of the apparatus for providing reagents according to the particular program for performing a lot of analytical determinations by means of the analyzer.

It is to be noted that the movements of the reagent container assemblies 11 on the turntable 1, i. e. rotation of the turntable 1 in both rotational directions and the shifting of the reagent container assemblies 11 between the turntable partitions 3 and 5 should be performed without abrupt starts and stops in order to avoid an intensive sloshing of the reagents in the reagent container assemblies 11. Therefore, the controlling means is programmed to control the driving means of the turntable 1 so as to perform the movements of the reagent container assemblies 11 in a harmonic manner. The same applies to the movement of the shift mechanism 29.

Also the course of movement of the treatment means 38 and 40 is controlled according to a particular scheme in order to achieve a trouble-free and time-optimized operation of the apparatus for providing reagents.

## Claims

1. Analyzer comprising an apparatus for providing reagents,
wherein said apparatus for providing reagents comprises
- a turntable (1) having an axis (7) of rotation and being adapted for storing thereon a plurality of reagent container assemblies (11) in an arrangement of at least one arcuate row,
- at least one treatment zone (23) for treating reagent container assemblies (11) stored on said turntable (1), and
- treatment means (29, 38, 40) for treating reagent container assemblies (11) positioned in said treatment zone (23),
wherein said turntable (1) comprises compartments (9, 25, 27) arranged to accommodate the reagent container assemblies (11) at predetermined locations on the turntable (1) so as to form said arrangement of at least one arcuate row of reagent container assemblies (11) corresponding to the arrangement of said compartments (9, 25, 27), and wherein said turntable (1) is adjustable by rotation so as to selectively move compartments (9, 25, 27) in predetermined positions for disposing reagent container assemblies (11) in predetermined positions in said treatment zone (23),
**characterized in that** said turntable (1) comprises
- a first circular turntable partition (3) centered around the axis of rotation (7) and carrying said arcuate row of compartments (9), and
- a second turntable partition (5) arranged radially adjacent to said first turntable partition (3) and carrying a first compartment (25) for accommodating a reagent container assembly (11) therein,
wherein said first turntable partition (3) is rotatable relative to the second turntable partition (5) about said axis of rotation (7) so as to selectively adjust a compartment (9) of said first turntable partition in radial alignment with said first compartment (25) of the second turntable partition in a mutual transfer position in which a reagent container assembly (11) is radially shiftable between said aligned compartments (9, 25) in said treatment zone (23).

2. Analyzer according to claim 1, **characterized in that** the first circular turntable partition (3) is arranged radially outward of the second turntable partition (5) with regard to the axis of rotation (7).

3. Analyzer according to claim 1 or 2, **characterized in that** said apparatus for providing reagents further comprises a container shift mechanism (29) for shifting a reagent container assembly (11) between radially aligned compartments (9, 25, 27) of said turntable partitions (3, 5) in their mutual transfer position, wherein said container shift mechanism (29) comprises radially movable engagement means (63, 65) for engaging and shifting a reagent container assembly (11) between compartments (9, 25, 27) in their mutual transfer position.

4. Analyzer according to at least one of the preceding claims, **characterized in that** said second turntable partition (5) carries a plurality of compartments (25, 27) including said first compartment (25) for accommodating reagent container assemblies (11) in an arrangement of an arcuate row radially adjacent said arcuate row of compartments (9) of the first turntable partition (3), wherein at least two of the compartments (25, 27), preferably all compartments (25, 27) of said second turntable partition (5) are radially alignable with respective compartments (9) of the first turntable partition (3) in mutual transfer positions.

5. Analyzer according to claim 4, **characterized in that** said container shift mechanism (29) is movable around the axis of rotation (7) in selected angular positions corresponding to angular positions of the radial alignment of compartments (9, 25, 27) aligned in their mutual transfer positions.

6. Analyzer according to at least one of the preceding claims, wherein each reagent container assembly (11) consists of at least two, preferably of three container sections (13a, 13b, 13c) each having an upper opening (17) and a cap (19) for closing the upper opening (17) of the respective container section (13a, 13b, 13c), wherein said caps (19) being selectively and reversibly displaceable from a closing position in an opening position in order to uncover the openings (17) of the container sections (13a, 13b, 13c), **characterized in that** said treating means comprise at least one cap manipulating mechanism for selectively displacing caps (19) of reagent container assemblies (11) into their opening position and closing position, respectively.

7. Analyzer according to at least one of the preceding claims, **characterized in that** said treatment means (29, 38, 40) comprise pipetting means (40) movable for access to at least one of reagent container assemblies (11) positioned in said predetermined positions in said treatment zone (23).

8. Analyzer according to claim 7, **characterized in that** at least one of the compartments (9) of the first turntable partition (3) and at least one of the compartments (25, 27) of the second turntable partition (5) are aligned to dispose reagent container assemblies (11) contained therein on a straight radial line when positioned relative to each other in said predetermined positions in the treatment zone (23), and that said apparatus for providing reagents comprises a driving and guiding means (43, 44, 47, 49) for selectively moving said pipetting means to reagent container assemblies (11) positioned relative to each other in said predetermined positions in the treatment zone (23).

9. Analyzer according to claim 8, **characterized in that** said pipetting means (40) comprise at least two pipetting units (39, 41) and **in that** said driving and guiding means (43, 44, 47, 49) are adapted to selectively move each pipetting unit (39, 41) according to a specific treatment program.

10. Analyzer according to at least one of the preceding claims, **characterized in that** said treatment means (29, 38, 40) comprise agitating means (38) including a stirrer (37) adapted to access a reagent container assembly (11) accommodated in the first compartment (25) of the second turntable partition (3).

11. Analyzer according to claims 3 and 7, **characterized in that** the container shift mechanism (29) and the pipetting means (40) are simultaneously operable in order to simultaneously treat separate reagent container assemblies (11) with the container shift mechanism (29) and the pipetting means (40).

12. Analyzer according to claims 7 and 10, **characterized in that** the agitating means (38) and the pipetting means (40) are simultaneously operable in order to simultaneously treat separate reagent container assemblies (11) with the agitating means (38) and the pipetting means (40).

13. Analyzer according to at least one of the preceding claims, **characterized by** a control means for controlling the apparatus for providing reagents according to a predetermined program.

14. Analyzer according to at least one of the preceding claims, **characterized in that** the second turntable partition (5) is fixed with regard to the axis of rotation (7) whereas the first turntable partition (3) is rotatable around the second turntable partition.

15. Analyzer according to at least one of the preceding claims, **characterized in that** the turntable (1) has a radial inner center including the axis of rotation (7), wherein a cleaning station for cleaning treatment means (37, 38) and a drain channel (85) for draining cleaning fluid is arranged in the area of said radial inner center.

16. Analyzer according to claims 10 and 15, **characterized in that** said agitator means (37, 38) is movable between a working position to agitate fluid in a reagent container assembly (11) positioned in the first compartment (25) and a cleaning position to be cleaned by said cleaning means of said cleaning station.
